# EUROPÄISCHE PATENTSCHRIFT

(11) **EP 2 687 076 B1**
(45) Veröffentlichungstag und Bekanntmachung des Hinweises auf die Patenterteilung: **04.01.2017**
(21) Anmeldenummer: 13401054.5
(22) Anmeldetag: 03.06.2013
(51) Int. Cl.: A01C 15/00, B21D 22/26

(54) **LANDWIRTSCHAFTLICHE VERTEILMASCHINE**
SPREADER
MACHINE AGRICOLE D'ÉPANDAGE

(30) Priorität: 07.06.2012 DE 102012104943
(43) Veröffentlichungstag der Anmeldung: 22.01.2014
(73) Patentinhaber: Amazonen-Werke H. Dreyer GmbH & Co. KG, 49205 Hasbergen (DE)
(72) Erfinder: Hofter, Rainer, 49143 Bissendorf (DE); Johannaber, Stefan Jan, 49536 Lienen (DE); Krabbe, Ulrich, 49205 Hasbergen (DE); Wiebusch, Thorsten, 49205 Hasbergen (DE)

(56) Entgegenhaltungen:
- WO-A1-98/09890
- DE-A1-102005 034 282
- DE-A1-102010 000 298
- US-A- 5 187 966

## Beschreibung

Die Erfindung betrifft eine landwirtschaftliche Verteilmaschine gemäß des Oberbegriffes des Patentanspruches 1.

Eine derartige landwirtschaftliche Verteilmaschine ist in DE 697 01 887 T3 beschrieben. Der Vorratsbehälter und das Aufsatzbehälterelement dieser Verteilmaschine besteht aus einzelnen Wandelementen, die durch Abkantungen gebildete Flanschbereiche aufweisen und über diese miteinander zu verbinden sind. Aufgrund dieser durch Abkantungen gebildeten Flanschbereiche ist es erforderlich, dass die einzelnen Randbereiche geradlinig verlaufend ausgebildet sein müssen. Hierdurch ist die Gestaltung der Aufsatzelemente bzw. deren Flanschbereiche sehr eingeschränkt.

Durch die DE 10 2010 000 298 A1 ist eine weitere landwirtschaftliche Verteilmaschine bekannt geworden, deren Grundgehälter durch Tiefziehvorgänge hergestellt ist. Hierdurch ist es möglich, die Eckbereiche abgerundet auszubilden. Problematisch ist nun, an die oberen, gerundeten Randbereiche ein sich dicht anschließendes Aufsatzbehälterelement aufzusetzen.

Der Erfindung liegt die Aufgabe zu Grunde, in einfacher Weise Flanschbereiche zu schaffen, die in einfacher Weise einander angepasst ausgebildet sind.

Diese Aufgabe wird erfindungsgemäß dadurch gelöst, dass die Ausformungen zumindest der Eckbereiche der unteren Flanschbereiche des Aufsatzbehälterelementes zur Anpassung an die Kontur des oberen umlaufenden Bereiches des Grundvorratsbehälters als Prägeelemente ausgebildet sind, dass die übrigen nicht durch Prägung geschaffenen Ausformungen zur Ausgestaltung des Aufsatzbehälterelementes mittels Abkantung von Teilbereichen der Wandelemente des Aufsatzbehälterelementes geschaffen sind.

Infolge dieser Maßnahmen werden die Flanschbereiches durch Prägung geschaffen und entsprechend an die Ausformung und Ausgestaltung der oberen Flanschbereiches des Vorratsbehälters ausreichend genau angepasst ausgebildet. Somit wird eine hohe Passgenauigkeit der miteinander zu verbindenden Flanschbereiche erreicht.

Eine angepasste Ausgestaltung der Flanschbereiche der Seitenwände lässt sich dadurch erreichen, dass die unteren Bereiche des Aufsatzbehälterelementes als sich an die Seitenwände des Aussatzbehälterelementes durch Prägung angeformte Rundungen zur Anpassung an die Kontur des oberen umlaufenden Bereiches des Grundbehälters ausgebildet sind.

Um die aufrechten Eckbereiche der Seitenwandelemente des Aufsatzelementes in einfacher Weise ausgestalten zu können, ist vorgesehen, dass die aufrechten Eckbereiche der seitlichen Wandelemente des Aufsatzelementes durch Abkantung hergestellte Flanschelemente zur Verbindung mit den vorderen und/oder hinteren Wandelementen des Aussatzbehälterelementes aufweisen.

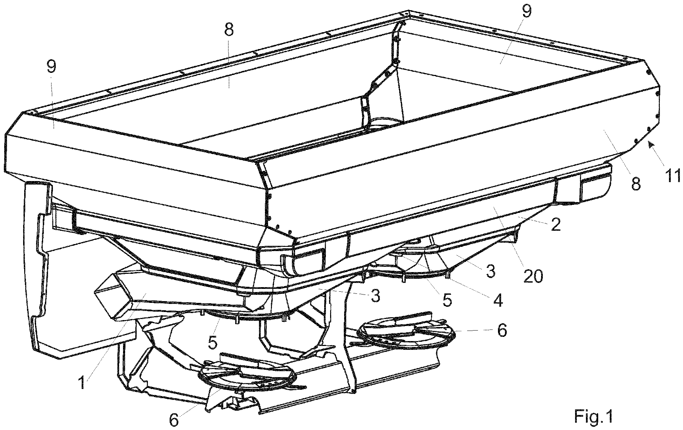

Weitere Einzelheiten der Erfindung sind der Beispielsbeschreibung zu entnehmen. Die Zeichnungen zeigen
- Fig.1: die als Schleuderstreuer ausgebildete landwirtschaftliche Verteilmaschine mit Vorratsbehälter und Aufsatzbehälterelement in perspektivischer Darstellung,

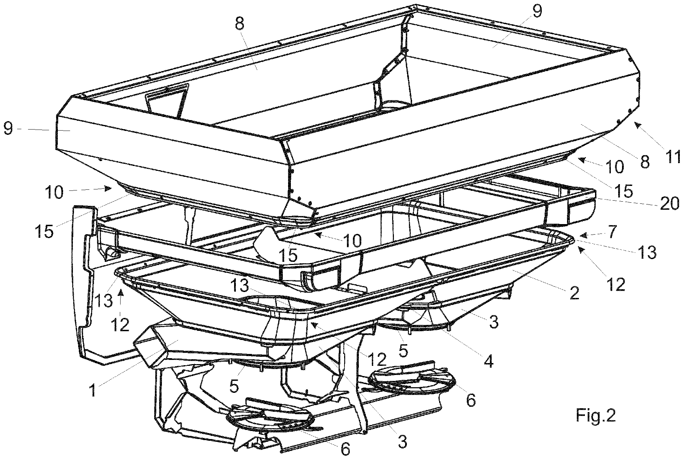

- Fig. 2: die Verteilmaschine gemäß Fig. 1, wobei das Aufsatzelement von dem oberen Bereich des Vorratsbehälters abgenommen dargestellt ist.
- Fig. 3: eine Seitenwand des Aufsatzbehälterelementes vor den Präge- und Abgabenvorgängen in perspektivischer Darstellung,
- Fig. 4: die Seitenwand gemäß Fig. 3 in Seitenansicht,
- Fig. 5: die Seitenwand nach dem Prägevorgang zur Anformung des unteren Flanschbereiches in perspektivischer Darstellung,
- Fig. 6: die Seitenwand mit dem angeprägten Flanschbereich in Seitenansicht,

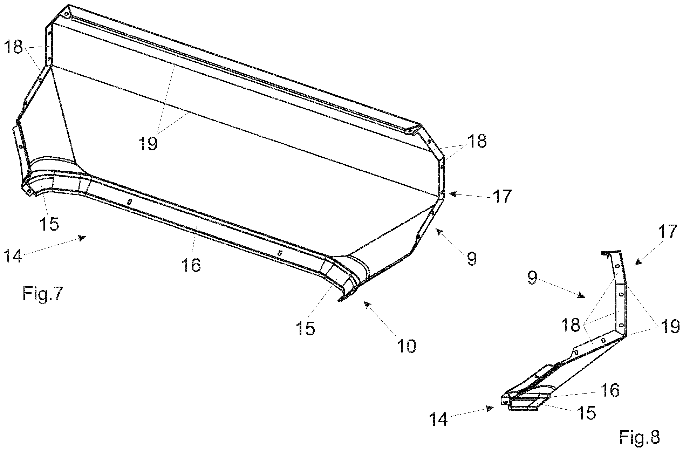

- Fig. 7: die Seitenwand nach den Präge unter den Abgangvorgängen zur Anformung der verschiedenen Flanschbereiche in perspektivischer Darstellung und
- Fig. 8: die Seitenwand gemäß Fig. 7 in Seitenansicht.

Die als Verteilmaschine gebildete landwirtschaftliche Vorrichtung zum Ausbringen von körnigem Material, beispielsweise Mineraldünger ist im Ausführungsbeispiel als Schleuderdüngerstreuer ausgestaltet. Der Streuer weist einen von Rahmenelementen 1 getragenen Grundvorratsbehälter 2 auf, der in zwei Auslauftrichter 3 ausmündet. Der Rahmen 1 ist auf seiner Vorderseite mit bekannten und daher in nicht dargestellter Weise mit Dreipunktkupplungselementen zum Anbau an einen Dreipunktkraftheber eines Ackerschlepper ausgestattet. Der Vorratsbehälter 2 weist zwei durch ein dachförmiges Mittelteil 4 voneinander geteilte Auslauftrichter 3 auf. An den unteren Enden der Auslauftrichter 3 sind Befestigungselemente für die Anordnung der die Auslauftrichter nach unten verschließende und einstellbare Dosiervorrichtungen 5 angeordnet. Über die Dosiervorrichtungen 5 wird das sich in dem Vorratsbehälter 2 befindliche Material in einstellbaren Mengen den unterhalb der Dosiervorrichtungen 5 angeordneten und rotierend angetriebenen Schleuderscheiben 6 zugeleitet.

An dem oberen umlaufenden Bereich 7 des Grundvorratsbehälters 2 lässt sich ein aus mehreren einzelnen Wandelementen 8 und 9 zusammengesetztes und einen unteren Flanschbereich 10 aufweisendes Aufsatzbehälterelement 11 anordnen. Der obere Randbereich 7 des Vorratsbehälters 2 weist in seinen Eckbereichen 12 abgerundete Randbereiche 13 auf. Dieser obere Randbereich 7 des Vorratsbehälters 2 dient als Flanschbereich zum Anflanschen des Aufsatzbehälterelementes 11.

Das Aufsatzbehälterelement 11 wird durch zwei spiegelbildlich ausgebildete Vorder- und Rückwände 8 und zwei ebenfalls spiegelbildlich ausgebildete Seitenwände 9 gebildet, die mittels geeigneter Befestigungsmittel miteinander verbunden sind. Im Ausführungsbeispiel sind sie die Verbindungsmittel die Flanschelemente und diese miteinander verbindende Schrauben ausgebildet. Ebenfalls ist es möglich, die einzelnen Teilelemente 8 und 9 des Aufsatzbehälterelementes 11 miteinander zu verschweißen.

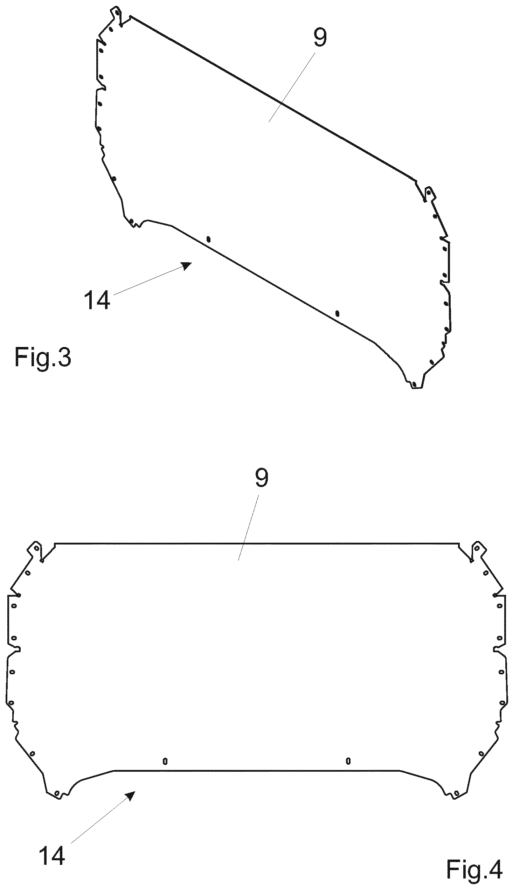

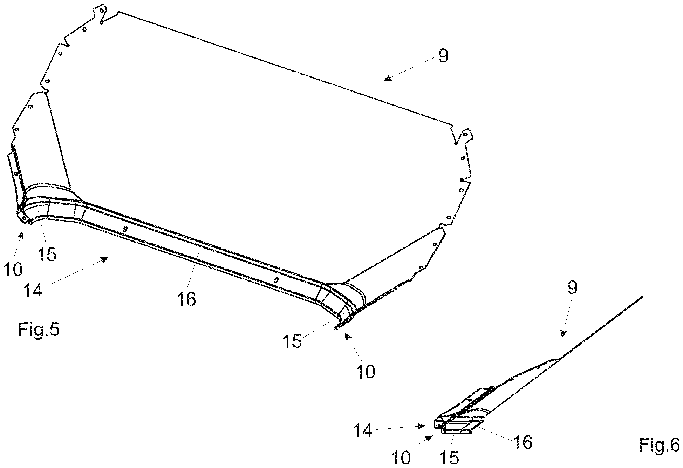

Um in die unteren Bereiche 14 der Seitenwände 9 an die oberen Randbereiche 7 des Vorratsbehälters 2, insbesondere den abgerundeten Bereichen 13 des Vorratsbehälters 2 entsprechend anzupassen, damit die Flanschbereiche 7 und 10 konturengenau entsprechend ausgebildet sind, werden die Bereiche 14 durch ein Prägewerkzeug hergestellt. Es erfolgt eine Umformung der in den Fig. 3 und 4 dargestellten ebenen Bleche nach der Darstellung nach Fig. 5

und 6 zur Anformung der Flanschelemente 15 und 16. Somit sind die Ausformungen zumindest der Eckbereiche der unteren Flanschbereiche 10 des Aufsatzbehälterelementes 11 zur Anpassung an die Kontur des oberen umlaufenden Bereiches 7 des Grundvorratsbehälters 2 als Prägeelemente 15 und 16 ausgebildet, wie die Fig. 5 und 6 zeigen. In die übrigen nicht durch Prägung geschaffenen Ausformungen 17 zur Ausgestaltung des Aufsatzbehälterelementes 11 in deren geraden Bereichen sind mittels Abkantung von Teilbereichen der Wandelemente des Aufsatzbehälterelementes 11 geschaffen. Es sind also die unteren Bereiche des Aufsatzelementes 11 als sich an die Seitenwände 9 des Aufsatzbehälterelementes 11 durch Prägung angeformte Rundungen 15 zur Anpassung an die Kontur des oberen umlaufenden Bereiches 7 des Grundbehälters 2 ausgebildet. Währenddessen weisen die aufrechten Eckbereiche 18 der seitlichen Wandelemente 9 des Aufsatzelementes 11 durch Abkantung hergestellte Flanschelemente zur Verbindung mit den vorderen und hinteren Wandelementen 8 des Aufsatzbehälterelementes 11 auf. Ebenfalls sind die übrigen Abkantungen 19, die geradlinig verlaufen, durch übliches Abkanten hergestellt.

Zwischen dem oberen Vorratsbehälterbereich 7 und dem unteren Bereich des Aufsatzelementes 11 ist ein Abdeckelement 20 angeordnet.

## Patentansprüche

1. Landwirtschaftliche Verteilmaschine zum Ausbringen von körnigen Materialien mit einem von Rahmenelementen (1) getragenen in zumindest zwei Auslauftrichter (3) ausmündenden Grundvorratsbehälter (2), wobei die Auslauftrichter (3) jeweils von Dosiervorrichtungen (5) abgeschlossen sind, wobei an dem oberen umlaufenden Bereich (7) des Grundvorratsbehälters (2) ein zumindest aus mehreren einzelnen Wandelementen (8, 9) zusammengesetztes und einen unteren Flanschbereich (10) aufweisendes Aufsatzbehälterelement (11) angeordnet ist,
**dadurch gekennzeichnet, dass**
die Ausformungen zumindest der Eckbereiche (15) der unteren Flanschbereiche (10) des Aufsatzbehälterelementes (11) zur Anpassung an die Kontur des oberen umlaufenden Bereiches (7) des Grundvorratsbehälters (2) als Prägeelemente ausgebildet sind, dass die übrigen nicht durch Prägung geschaffenen Ausformungen (17, 18, 19) zur Ausgestaltung des Aufsatzbehälterelementes (11) mittels Abkantung von Teilbereichen der Wandelemente (8, 9) des Aufsatzbehälterelementes (11) geschaffen sind.

2. Verteilmaschine nach Anspruch 1, **dadurch gekennzeichnet, dass** die unteren Flanschbereiche (10) des Aufsatzbehälterelementes (11) als sich an die Seitenwände (9) des Aufsatzbehälterelementes (11) durch Prägung angeformte Rundungen (15) zur Anpassung an die Kontur des oberen umlaufenden Bereiches (7) des Grundbehälters (2) ausgebildet sind.

3. Verteilmaschine nach Anspruch 1, **dadurch gekennzeichnet, dass** die aufrechten Eckbereiche (17) der seitlichen Wandelemente (9) des Aufsatzelementes (11) durch Abkantung hergestellte Flanschelemente (18) zur Verbindung mit den vorderen und/ oder hinteren Wandelementen (8) des Aussatzbehälterelementes (11) aufweisen.

## Claims

1. Agricultural distributor for dispensing granular materials, with a basic storage container (2) which is supported by frame elements (1) and opens out into at least two discharge hoppers (3), wherein the discharge hoppers (3) are each closed by metering devices (5), wherein an attachment container element (11) which is at least composed of a plurality of individual wall elements (8, 9) and has a lower flange region (10) is arranged on the upper encircling region (7) of the basic storage container (2), **characterized in that** the formations at least of the corner regions (15) of the lower flange regions (10) of the attachment container element (11) are designed as stamping elements for adaptation to the contour of the upper encircling region (7) of the basic storage container (2), **in that** the remaining formations (17, 18, 19) not created by stamping are provided for the configuration of the attachment container element (11) by means of folding partial regions of the wall elements (8, 9) of the attachment container element (11).

2. Distributor according to Claim 1, **characterized in that** the lower flange regions (10) of the attachment container element (11) are designed as rounded portions (15), which are moulded onto the side walls (9) of the attachment container element (11) by stamping, for adaptation to the contour of the upper encircling region (7) of the basic container (2).

3. Distributor according to Claim 1, **characterized in that** the upright corner regions (17) of the lateral wall elements (9) of the attachment element (11) have flange elements (18), which are produced by folding, for connection to the front and/or rear wall elements (8) of the attachment container element (11).

## Revendications

1. Machine agricole d'épandage pour épandre des matériaux granuleux comprenant un réservoir de base (2) porté par des éléments de cadres (1) et débouchant dans au moins deux trémies de sortie (3), les trémies de sortie (3) étant à chaque fois terminées par des dispositifs de dosage (5), un élément de récipient de recouvrement (11), composé d'au moins plusieurs éléments de paroi individuels (8, 9) et présentant une région de bride inférieure (10), étant disposé au niveau de la région périphérique supérieure (7) du réservoir de base (2)
**caractérisée en ce que**
les formations d'au moins les régions de coin (15) des régions de bride inférieures (10) de l'élément de récipient de recouvrement (11) sont réalisées en tant qu'éléments gaufrés, de manière à s'adapter au contour de la région périphérique supérieure (7) du réservoir de base (2), **en ce que** les autres formations (17, 18, 19) non formées par gaufrage pour la configuration de l'élément de récipient de recouvrement (11) sont créées au moyen d'un pliage de régions partielles des éléments de paroi (8, 9) de l'élément de récipient de recouvrement (11).

2. Machine d'épandage selon la revendication 1, **caractérisée en ce que** les régions de bride inférieures (10) de l'élément de récipient de recouvrement (11) sont réalisées sous la forme d'arrondis (15) façonnés par gaufrage au niveau des parois latérales (9) de l'élément de récipient de recouvrement (11), pour l'adaptation au contour de la région périphérique supérieure (7) du récipient de base (2).

3. Machine d'épandage selon la revendication 1, **caractérisée en ce que** les régions de coin verticales (17) des éléments de paroi latéraux (9) de l'élément de recouvrement (11) présentent des éléments de bride (18) fabriqués par pliage pour la connexion aux éléments de paroi avant et/ou arrière (8) de l'élément de récipient de recouvrement (11).
